# EUROPÄISCHE PATENTSCHRIFT

(11) **EP 3 056 718 B1**
(45) Veröffentlichungstag und Bekanntmachung des Hinweises auf die Patenterteilung: **27.05.2020**
(21) Anmeldenummer: 16000041.0
(22) Anmeldetag: 11.01.2016
(51) Int. Cl.: F02B 39/10, F02D 41/02, F02D 41/00, F01N 3/023, F01N 3/025, F01N 3/02, F01N 3/20

(54) **VERFAHREN UND VORRICHTUNG ZUR ANHEBUNG UND/ODER ABSENKUNG EINER ABGASTEMPERATUR EINER BRENNKRAFTMASCHINE MIT EINER IN EINER ABGASLEITUNG ANGEORDNETEN ABGASNACHBEHANDLUNGSEINRICHTUNG**
METHOD AND DEVICE FOR RAISING AND/OR LOWERING AN EXHAUST GAS TEMPERATURE OF A COMBUSTION ENGINE WITH AN EXHAUST GAS AFTERTREATMENT DEVICE IN AN EXHAUST GAS LINE
PROCEDE ET DISPOSITIF D'AUGMENTATION ET/OU DE REDUCTION D'UNE TEMPERATURE DE GAZ D'ECHAPPEMENT D'UN MOTEUR A COMBUSTION INTERNE COMPRENANT UN DISPOSITIF DE POST-TRAITEMENT DES GAZ D'ECHAPPEMENT DISPOSE DANS UNE CONDUITE DE GAZ D'ECHAPPEMENT

(30) Priorität: 12.02.2015 DE 102015001797
(43) Veröffentlichungstag der Anmeldung: 17.08.2016
(73) Patentinhaber: MAN Truck & Bus SE, 80995 München (DE)
(72) Erfinder: Pappenheimer, Andreas, 90408 Nürnberg (DE); Sommermann, Andreas, 91560 Heilsbronn (DE)
(74) Vertreter: v. Bezold & Partner Patentanwälte - PartG mbB

(56) Entgegenhaltungen:
- EP-A1- 2 302 184
- DE-A1- 10 062 377
- DE-A1-102007 056 102
- US-A1- 2006 236 692
- US-A1- 2010 263 639

## Beschreibung

Die Erfindung betrifft ein Verfahren zur Anhebung und/oder Absenkung einer Abgastemperatur einer Brennkraftmaschine mit einer in einer Abgasleitung angeordneten Abgasnachbehandlungseinrichtung. Die Erfindung betrifft ferner eine Steuervorrichtung zur Anhebung und/oder Absenkung einer Abgastemperatur einer Brennkraftmaschine mit einer in einer Abgasleitung angeordneten Abgasnachbehandlungseinrichtung.

Aus der Praxis ist bekannt, dass die Schadstoffemission einer Brennkraftmaschine durch katalytische Nachbehandlung des Abgases mit Hilfe einer Abgasnachbehandlungseinrichtung, z. B. aufweisend einen Abgaskatalysator, wirksam verringert werden kann. Eine wichtige Voraussetzung hierfür ist jedoch, dass der Katalysator seine Anspringtemperatur (Light-Off-Temperatur) erreicht hat. Unterhalb dieser Temperatur ist der Abgaskatalysator wenig bis unwirksam, und die Reaktion findet nur mit ungenügend kleinen Konvertierungsraten statt. Insbesondere bei Systemen mit Abgasturboaufladung ist aufgrund der Wärmesenke durch die Abgasturbine das emissionsoptimale Erreichen des Katalysator-Light-Offs zu Vermeidung hoher Schadstoffemissionen von hoher Bedeutung. Bei Brennkraftmaschinen dieser Art ist es somit erforderlich, Vorkehrungen zu treffen, damit der Abgaskatalysator seine Anspringtemperatur (Light-Off-Temperatur) möglichst schnell erreicht.

Zur Anhebung der Abgastemperatur auf eine Anspringtemperatur ist es aus der Praxis bekannt, beispielsweise die Einspritzparameter der Brennkraftmaschine derart zu verstellen, dass die verstellten Einspritzparameter eine Erhöhung der Abgastemperatur bewirken. Beispielsweise kann dies mit einer Spätverstellung des Einspritzbeginns erreicht werden. Andere bekannte Maßnahmen erfordern das Verstellen einer Drosselklappe, das Aktivieren eines zusätzlich in den Abgasstrang eingebrachten Brennersystems oder das Schließen einer Motorstauklappe. Nachteilig an den zuvor bekannten Ansätzen ist, dass zusätzliche Bauteile, z. B. Brennersystem, Motorstauklappe etc., vorgesehen werden müssen und Wirkungsgradnachteile in Kauf genommen werden müssen.

Die Offenlegungsschrift EP 1 431 529 A1 offenbart beispielsweise ein Verfahren und eine Vorrichtung zur Anhebung und/oder Absenkung einer Abgastemperatur einer Brennkraftmaschine mit einer in einer Abgasleitung angeordneten Abgasnachbehandlungseinrichtung, wobei die Abgastemperatur durch in die Abgasleitung eingeleitetes Gas angehoben oder abgesenkt wird. Die hierfür verwendete Einleiteinrichtung für das Gas kann eine eingesetzte, als Injektor ausgebildete Düse oder eine in der Abgasleitung eingesetzte Sperrdüse oder eine Strahlpumpe sein. Nachteilig hieran ist, dass eine zusätzliche Einleiteinrichtung vonnöten ist.

Eine Brennkraftmaschine mit einer Abgasnachbehandlungseinrichtung in Form eines Partikelfilters ist ferner aus der DE 43 25 004 C2 bekannt. Bei diesem Partikelfilter wird eine Anhebung (bzw. Absenkung) der Abgastemperatur zur Steuerung des Abbrennvorgangs in dem Partikelfilter durch eine Drosselung (bzw. Entdrosselung) des die Abgasleitung durchströmenden Abgases erreicht. Dies wird durch eine Klappe in dem Filtergehäuse erreicht, die von einem thermostatisch gesteuerten Gestänge verschwenkt wird. Zusätzlich ist eine elektrische Heizung für den Thermostaten und den Partikelfilter vorgesehen. Diese Anlage ist bauaufwändig und benötigt viele speziell angefertigte Teile. So muss das Partikelfiltermaterial zur Ermöglichung der Schwenkbewegung der Klappe eine genau vorgegebene Kontur aufweisen. Zudem ist eine wirksame Steuerung nur bezüglich der Anhebung der Abgastemperatur möglich.

Weitere aufgeladene Brennkraftmaschinen mit einem elektrifizierten Abgasturbolader sind aus der US 2006/236692 A1, der US 2010/263639 A1 und der EP 2 302 184 A1 bekannt.

Es ist somit eine Aufgabe der Erfindung, ein verbessertes Verfahren und eine verbesserte Vorrichtung zur Anhebung und/oder Absenkung einer Abgastemperatur einer Brennkraftmaschine mit einer in einer Abgasleitung angeordneten Abgasnachbehandlungseinrichtung bereitzustellen, mit denen Nachteile herkömmlicher Techniken vermieden werden können.

Diese Aufgaben werden durch Vorrichtungen und Verfahren mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Erfindungsgemäß wird ein Verfahren zur Einstellung, insbesondere zur Anhebung und/oder Absenkung, einer Abgastemperatur einer Brennkraftmaschine mit einer in einer Abgasleitung angeordneten Abgasnachbehandlungseinrichtung bereitgestellt. Gemäß allgemeinen Gesichtspunkten der Erfindung wird zur Einstellung der Abgastemperatur für die Abgasnachbehandlung ein elektromotorischer Betrieb und/oder ein generatorischer Betrieb eines elektrifizierten Abgasturboladers verwendet. Die Brennkraftmaschine befindet sich bei Durchführung des Verfahrens im befeuerten Betrieb.

Ein elektrifizierter Abgasturbolader ist an sich aus dem Stand der Technik bekannt und wird auch als ein elektromotorisch betreibbarer bzw. elektromotorisch unterstützter Abgasturbolader bezeichnet. Der elektrifizierte Abgasturbolader weist eine elektrische Maschine auf, die drehmomentübertragend mit der Antriebswelle des Abgasturboladers oder allgemein dem Läufer koppelbar bzw. gekoppelt ist. Die elektrische Maschine ist zum Antrieb bzw. zur Antriebsunterstützung des Abgasturboladers vorgesehen (nachfolgend auch als elektromotorischer Betrieb des Abgasturboladers bezeichnet) und/oder kann vom Abgasturbolader generatorisch betrieben werden. Der Läufer des Abgasturboladers ist aus der Abgasturbine, dem Verdichter und der Antriebswelle gebildet, wobei die Abgasturbine und der Verdichter über die Antriebswelle bewegungsgekoppelt sind. Aus der Praxis ist bereits bekannt, mit dem Elektromotor eines elektromotorisch unterstützten Abgasturboladers den Aufladeprozess der Brennkraftmaschine temporär zu unterstützen, insbesondere zur Überbrückung des sogenannten Turbolochs beim Anfahren.

Die Einstellung der Abgastemperatur für die Abgasnachbehandlung mittels eines elektromotorischen Betriebs und/oder eines generatorischen Betriebs eines elektrifizierten Abgasturboladers bietet insbesondere den Vorzug, dass bei Fahrzeugzeugen, die bereits mit elektrifizierten Abgasturboladern ausgestattet sind, weitere Zusatzsysteme zur Erhöhung der Abgastemperatur, wie z. B. Brenner, Drosselklappe oder Zusatzverdichter, entfallen können oder bei erfindungsgemäßer Verwendung des Abgasturboladers in Kombination mit diesen herkömmlichen Ansätzen eine schnellere Anhebung der Abgastemperatur erzielt werden kann.

Erfindungsgemäß wird der elektromotorische Betrieb und/oder der generatorische Betrieb des elektrifizierten Abgasturboladers nach Erfüllung wenigstens einer Aktivierungsbedingung zur Aktivierung eines Abgas-temperaturmanagements gestartet. Unter dem Begriff "Abgastemperaturmanagement" wird die gezielte Anhebung und/oder Absenkung der Abgastemperatur verstanden. Falls der entsprechende Betrieb zu diesem Zeitpunkt schon gestartet ist, kann dieser ggf. angepasst werden, um eine möglichst schnelle Annäherung der Abgastemperatur an eine Solltemperatur oder einen Solltemperaturbereich zu erreichen. Hierbei zeigt die Erfüllung der Aktivierungsbedingung an, dass die Abgastemperatur verändert werden soll, z. B., um einen optimalen Betrieb der Abgasnachbehandlungseinrichtung zu ermöglichen.

Hierbei wird der generatorische Betrieb des elektrifizierten Abgasturboladers gestartet, wenn die Erfüllung wenigstens einer Aktivierungsbedingung anzeigt, dass die aktuelle Abgastemperatur zu erhöhen ist, z. B. falls die Ist-Abgastemperatur unterhalb einer Anspringtemperatur einer Abgasnachbehandlungseinrichtung liegt. Ein generatorischer Betrieb des Abgasturboladers hat zur Folge, dass die Bewegungsenergie des Läufers zum Teil in elektrische Energie umgewandelt wird und der Läufer sich dadurch abbremst. Dadurch reduziert sich der Ladedruck bzw. Luftmassendurchsatz der Brennkraftmaschine. Aufgrund des reduzierten Ladedrucks sinkt das Luftzahlverhältnis (Lambda) und erzeugt heißeres Abgas. Die Verwendung des generatorischen Betriebs des Abgasturboladers zur Erhöhung der Abgastemperatur verringert ferner die Wirkungsgradnachteile im Vergleich zu den aus dem Stand der Technik bekannten Ansätzen.

Ferner wird der elektromotorische Betrieb des elektrifizierten Abgasturboladers gestartet oder angepasst, wenn die Erfüllung wenigstens einer Aktivierungsbedingung anzeigt, dass die aktuelle Abgastemperatur zu verringern ist. Ein elektromotorischer Betrieb des Abgasturboladers umfasst insbesondere einen elektromotorisch unterstützten Betrieb des Abgasturboladers, bei dem die elektrische Maschine den Läufer des Abgasturboladers zusätzlich beschleunigt. Der auf eine höhere Drehzahl beschleunigte Läufer des Abgasturboladers erhöht den Luftmassendurchsatz und das Luftzahlverhältnis (Lambda) und führt dadurch zu einer Absenkung der Abgastemperatur. Dies bietet den Vorteil, dass die Brennkraftmaschine und die Abgasnachbehandlungseinrichtung vor Überhitzung geschützt werden können.

Eine Möglichkeit der erfindungsgemäßen Realisierung sieht ferner vor, dass zumindest eine der folgenden Maßnahmen durchgeführt wird, wenn die Erfüllung wenigstens einer Aktivierungsbedingung anzeigt, dass die aktuelle Abgastemperatur zu erhöhen ist: (a) Verstellen der Drosselklappe, (b) Schließen einer Motorstauklappe, (c) Aktivieren eines zusätzlichen an der Abgasleitung angeordneten Brennersystems und (d) Verstellung der Einspritzparameter der Brennkraftmaschine, derart, dass die verstellten Einspritzparameter eine Erhöhung der Abgastemperatur bewirken, wobei zur Erhöhung der Abgastemperatur beispielsweise eine Spätverstellung des Einspritzbeginns und/oder eine Erhöhung der Dosiermenge des eingebrachten Brennstoffs vorgenommen werden kann.

Mit anderen Worten kann die erfindungsgemäße Einstellung der Abgastemperatur unter Verwendung eines elektromotorischen und/oder motorischen Betriebs des elektrifizierten Abgasturboladers mit herkömmlichen Maßnahmen und Verfahren zur Anpassung der Abgastemperatur kombiniert werden, wodurch eine besonders schnelle Erhöhung der Abgastemperatur erreicht werden kann.

Gemäß einer weiteren Variante des Ausführungsbeispiels, bei dem die erfindungsgemäße Verwendung des Abgasturboladers für das Abgastemperaturmanagement mit wenigstens einer der herkömmlichen Maßnahmen zur Anpassung der Abgastemperatur kombiniert wird, wird bei transienten Betriebszuständen zur Erhöhung der Abgastemperatur ein elektromotorischer Betrieb des Abgasturboladers gestartet. Transiente Betriebszustände sind nicht-stationäre Betriebszustände, beispielsweise ein Anfahrvorgang oder ein Schaltvorgang, in denen die der Turbine des Abgasturboladers zugeführte Abgasenergie/-menge stark schwankt. Der Elektromotor des Abgasturboladers kompensiert in diesen transienten Betriebszuständen somit durch einen elektromotorischen Betrieb ("Boost"-Betrieb) die Schwankungen in der Abgasenergie/-menge. Bei transienten Betriebszuständen kompensiert der elektromotorische Betrieb den stark schwankenden Luftmassendurchsatz in transienten Betriebszuständen, so dass die herkömmlichen Maßnahmen wirkungsvoller eingesetzt werden können.

Gemäß einem weiteren Aspekt der Erfindung kann eine Aktivierungsbedingung zur Aktivierung eines Abgastemperaturmanagements, die anzeigt, dass die Abgastemperatur zu erhöhen ist, ein Unterschreiten eines unteren Temperaturgrenzwerts durch die Abgastemperatur sein. Der untere Temperaturgrenzwert kann vorzugsweise eine Anspringtemperatur der Abgasnachbehandlungseinrichtung, z. B. eines Abgaskatalysators, sein.

Gemäß einer weiteren Variante kann eine Aktivierungsbedingung zur Aktivierung eines Abgastemperaturmanagements, die anzeigt, dass die Abgastemperatur zu erhöhen ist, ein Vorliegen eines Leerlaufs- und/oder Teillastbetriebszustands der Brennkraftmaschine sein. Gemäß dieser Variante wird ein generatorischer Betrieb des Abgasturboladers zur Erhöhung der Abgastemperatur somit nur in Leerlauf- und/oder Teillastbetriebszuständen eingesetzt. In diesen Betriebszuständen ist eine schnellere Aufheizung des Abgases von besonderer Bedeutung, da es aufgrund der verringerten Brennleistung in diesen Betriebszuständen sonst in der Regel überdurchschnittlich lange dauert, bis sich die Abgasnachbehandlungseinrichtung auf die Anspringtemperatur erwärmt hat.

Neben der Überwachung der Abgastemperatur können alternativ oder zusätzlich weitere Parameter als Bedingung zur Aktivierung des Abgastemperaturmanagements herangezogen werden: Beispielsweise kann eine Aktivierungsbedingung zur Aktivierung eines Abgastemperaturmanagements anhand eines bestimmten Werts wenigstens eines Motortemperatursensors ermittelt werden, wobei der wenigstens eine Motortemperatursensor eine Temperatur einer Ansaugluft, eines Motorkühlwassers und/oder eines Motoröls misst. Aus diesen Größen ist ein Maß für den Betriebszustand der Brennkraftmaschine und/oder der Abgasnachbehandlungseinrichtung ableitbar. Niedrige Temperaturen des Motorkühlwassers oder des Motoröls zeigen z. B. an, dass sich der Motor im Kaltlauf- oder Warmlaufbetrieb befindet, bei denen die Temperatur der Abgasnachbehandlungseinrichtung ohne zusätzliche Maßnahmen ebenfalls noch nicht ausreichend erwärmt wurde.

Ein weitere Möglichkeit sieht hierbei vor, dass eine Aktivierungsbedingung zur Aktivierung eines Abgastemperaturmanagements anhand einer Betriebsphase der Brennkraftmaschine ermittelt wird, wobei die Betriebsphase angibt, ob sich der Motor im Kaltlaufbetrieb, Warmlaufbetrieb oder Heißbetrieb befindet und/oder ob die Brennkraftmaschine länger als eine vorbestimmte Zeit im Schubbetrieb betrieben wurde. Derartige Betriebszustände korrelieren wiederum mit dem Temperaturzustand der Abgasnachbehandlungseinrichtung, da die Abgasnachbehandlungseinrichtung im Kaltlaufbetrieb, Warmlaufbetrieb oder nach einem längeren Schubbetrieb bzw. nicht befeuerten Betrieb in der Regel eine Temperatur unterhalb der Anspringtemperatur aufweist.

Die vorstehend beschriebene Anhebung und/oder Absenkung der Abgastemperatur unter Verwendung des elektrifizierten Abgasturboladers wird vorzugsweise temporär so lange durchgeführt, bis die Abgastemperatur einen gewünschten Sollwert oder Sollbereich erreicht hat.

Gemäß einem weiteren Gesichtspunkt der Erfindung wird eine Steuervorrichtung zur Einstellung, insbesondere zur Anhebung und/oder Absenkung, einer Abgastemperatur einer Brennkraftmaschine mit einer in einer Abgasleitung angeordneten Abgasnachbehandlungseinrichtung bereitgestellt. Die Steuereinrichtung ist eingerichtet, zu prüfen, ob wenigstens eine Aktivierungsbedingung zur Aktivierung eines Abgastemperaturmanagements erfüllt ist und falls ja, zur Einstellung der Abgastemperatur einen elektrifizierten Abgasturbolader der Brennkraftmaschine anzusteuern, um einen elektromotorischen und/oder einen generatorischen Betrieb des elektrifizierten Abgasturboladers festzulegen.

Die Steuervorrichtung kann insbesondere ausgeführt sein, das Verfahren wie in diesem Dokument offenbart durchzuführen. Zur Vermeidung von Wiederholungen sollen rein verfahrensgemäß offenbarte Merkmale auch als vorrichtungsgemäß offenbart gelten und beanspruchbar sein.

Die Erfindung betrifft ferner ein Kraftfahrzeug, insbesondere ein Nutzfahrzeug, mit einer durch einen elektrifizierten Abgasturbolader aufgeladenen Brennkraftmaschine, aufweisend eine Steuervorrichtung wie in diesem Dokument offenbart.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: ein schematisches Blockschaltbild zur Illustration einer Steuervorrichtung zur Einstellung der Abgastemperatur durch Ansteuerung eines elektrifizierten Abgasturboladers gemäß einer Ausführungsform der Erfindung;
- Figur 2: ein Ablaufdiagramm eines Verfahrens zur Anhebung und/oder Absenkung der Abgastemperatur gemäß einer Ausführungsform der Erfindung; und

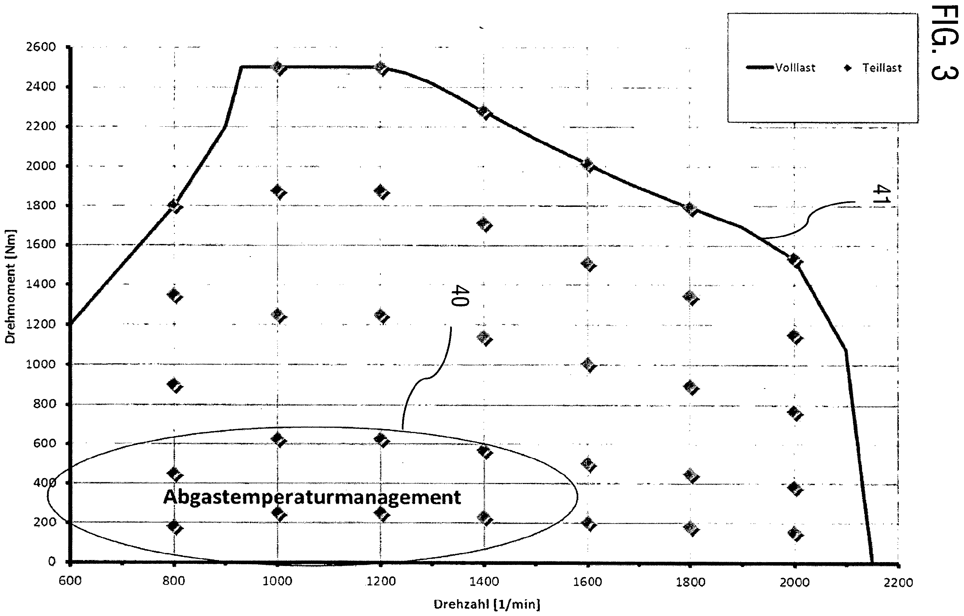

- Figur 3: ein Motorbetriebskennfeld zur Illustration der Betriebspunkte, in denen das Abgastemperaturmanagement gemäß einer Ausführungsform der Erfindung aktiviert ist.

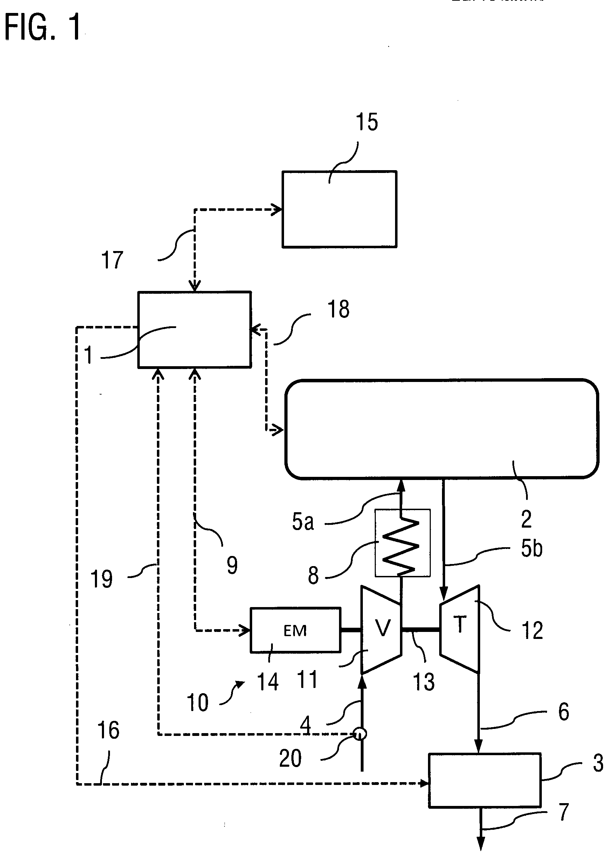

Figur 1 zeigt in Form eines stark schematisierten Blockschaltbildes eine aufgeladene Brennkraftmaschine 2 eines Nutzfahrzeugs, typischerweise einen Dieselmotor, und einen ihr zugeordneten elektrifizierten Abgasturbolader 10, nachfolgend auch als ATL bezeichnet. Der ATL 10 umfasst eine Turbine 12, die von einem Abgas der Brennkraftmaschine 2, das der Turbine 12 über die Abgasleitung 5b zugeführt wird, angetrieben wird. Danach strömt das Abgasgemisch über den Turbinenauslass durch eine Abgasleitung 6, in der eine an sich bekannte Abgasnachbehandlungseinrichtung, z. B. in Form eines Abgaskatalysators, angeordnet ist. Nach Durchlaufen der Abgasnachbehandlungseinrichtung strömt das Abgas über eine weitere Abgasleitung 7 zum Auspuff.

Die Turbine 12 ist durch eine Welle 13 mit einem Verdichter 11 verbunden. Dem Verdichter 11 wird über die Verdichtereinlassleitung 4 Frischluft zugeführt. Der Verdichter 11 verdichtet die der Brennkraftmaschine 2 zuzuführende Ladeluft und steigert somit die Leistung der Brennkraftmaschine 2 im normalen befeuerten Betrieb. Die durch den Verdichter 11 verdichtete Ladeluft wird über eine Ladeluftleitung einem Ladeluftkühler 8 zugeführt und anschließend über die Leitung 5a in die Brennkraftmaschine 2 eingespeist.

Der ATL 10 ist als elektrifizierter, d. h. als elektromotorisch unterstützter Abgasturbolader ausgeführt. Der ATL 10 ist hierzu mit einer motorisch und generatorisch betreibbaren elektrischen Maschine 14 versehen, die drehmomentübertragend mit der Antriebswelle 13 koppelbar bzw. gekoppelt ist und zum Antrieb bzw. zur Antriebsunterstützung des Läufers 11, 12, 13 des Abgasturboladers vorgesehen ist.

Der motorische und generatorische Betrieb der elektrischen Maschine 14, z. B. eines Elektromotors, wird von einer Steuervorrichtung 1 gesteuert, die hierzu über elektrische Leitungen mit dem Elektromotor 14 und mit einem Energiespeicher 15 für elektrische Energie, z. B. einer Starterbatterie oder einer Hochvoltbatterie eines hybridisierten Antriebsstrangs, verbunden ist, was durch die gepunkteten Linien 9 und 17 schematisch dargestellt ist. Für den motorischen Betrieb der elektrischen Maschine 14 wird dieser Energie von dem Energiespeicher 15 zugeführt. Der im generatorischen Betrieb der elektrischen Maschine 14 erzeugte Strom kann über die Steuervorrichtung 1 dem Energiespeicher 15 zugeführt werden.

Die Steuervorrichtung 1 ist im vorliegenden Ausführungsbeispiel ferner als Steuerung ausgeführt, die aktiv ein Abgastemperaturmanagement vornehmen kann, um eine Abgastemperatur anzuheben und/oder abzusenken. Hierbei ist die Steuerung, die beispielsweise als Mikroprozessor ausgebildet ist, über die Steuerleitung 18 mit der Brennkraftmaschine 2 verbunden, um zur Erhöhung der Abgastemperatur diese mit veränderten Einspritzparametern, z. B. einer Spätverstellung des Einspritzbeginns, anzusteuern.

Die Steuervorrichtung 1 ist zudem eingerichtet, den Betrieb der Abgasnachbehandlungseinrichtung 3 zu steuern, was durch die elektrische Leitung 16 dargestellt ist. Die Leitung 16 verbindet die Sensorik des Abgasstranges und/oder Abgasnachbehandlungssystems mit der Steuervorrichtung 1. Mit der Sensorik können in an sich bekannter Weise z. B. die Abgastemperatur nach der Turbine 12, die Temperatur vor und/oder nach einem Katalysator oder Partikelfilter, eine Differenztemperatur, ein Druck vor und/oder nach einem Katalysator oder Partikelfilter oder der Differenzdruck gemessen werden.

Die Steuervorrichtung 1 ist zur Steuerung der Abgastemperatur eingerichtet, fortlaufend Daten verschiedener Motortemperatursensoren zu empfangen. Beispielsweise ist in der Verdichtereinlassleitung 4 ein Temperatursensor 20 angeordnet, der die Temperatur der Ansaugluft misst und die Messwerte über die Signalleitung 19 an die Steuervorrichtung 1 übermittelt. Die Steuervorrichtung empfängt Messwerte weiterer Temperatursensoren (in Figur 1 nicht dargestellt), die in an sich bekannter Weise die Abgastemperatur und die Temperatur des Motorkühlwassers und des Motoröls messen.

Eine Besonderheit der erfindungsgemäßen Lehre liegt darin, dass die Steuervorrichtung 1 eingerichtet ist, im Rahmen des Abgastemperaturmanagements den ATL 10 anzusteuern, insbesondere durch einen generatorischen Betrieb des ATLs 10 die Abgastemperatur zu erhöhen oder ggf. durch einen elektromotorischen Betrieb des ATLs 10 die Abgastemperatur zu senken.

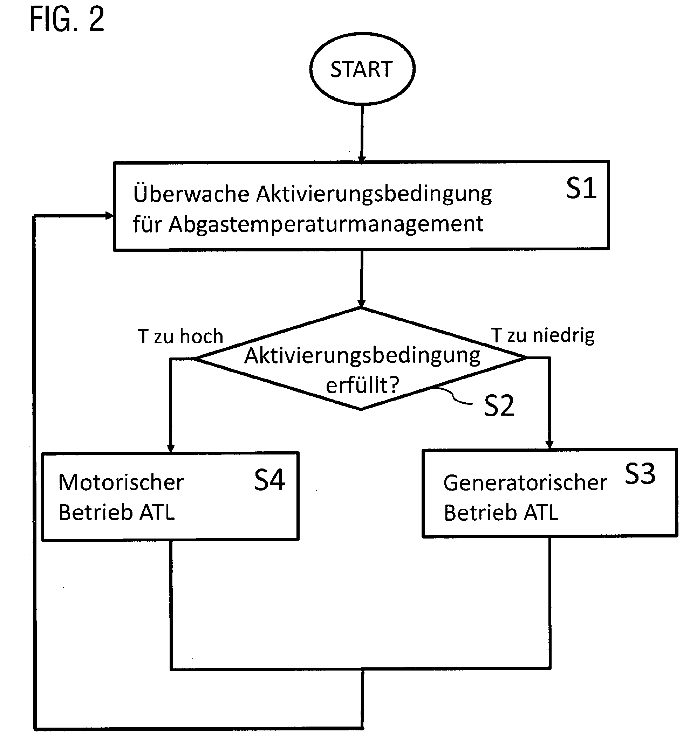

Der entsprechende Betrieb und das korrespondierende Verfahren sind beispielhaft in dem Ablaufdiagramm der Figur 2 illustriert.

In einem ersten Schritt S1 überwacht die Steuervorrichtung 1 im befeuerten Betrieb der Brennkraftmaschine 2, ob eine vorgegebene Aktivierungsbedingung für ein Abgastemperaturmanagement, bei dem die Abgastemperatur gezielt erhöht oder verringert werden soll, erfüllt ist. Hierbei zeigt die Erfüllung der Aktivierungsbedingung an, dass Abgastemperatur aktiv verändert werden soll, z. B. um einen optimalen Betrieb der Abgasnachbehandlungseinrichtung 3 zu ermöglichen. Die Aktivierungsbedingung ist beispielsweise erfüllt und zeigt an, dass die Abgastemperatur angehoben werden soll, wenn die Abgas-Ist-Temperatur in der Abgasleitung 5b unterhalb der Anspringtemperatur der Abgasnachbehandlungseinrichtung 3 liegt. Zur Überwachung dieser Aktivierungsbedingung kann die Steuervorrichtung 1 fortlaufend die Messwerte des Abgastemperatursensors 20 überwachen. Als eine weitere Aktivierungsbedingung kann die Steuervorrichtung prüfen, ob ein Kaltlauf- oder Warmlaufbetrieb der Brennkraftmaschine 2 vorliegt, da in diesen Betriebszuständen die Abgasnachbehandlungseinrichtung 3 in der Regel ebenfalls noch nicht ausreichend erwärmt ist.

Alternativ kann die Steuervorrichtung 3 die Aktivierungsbedingung anhand von Motortemperatursensoren, die die Temperatur der Ansaugluft, des Motorwassers oder des Motoröls messen, überwachen. Liegen die gemessenen Temperarturwerte jeweils unter einer vorgegebenen Temperaturschwelle, kann die Steuervorrichtung 3 daraus schließen, dass die Aktivierungstemperatur der Abgasnachbehandlungseinrichtung 3 nicht erreicht ist. Derartige Temperaturschwellen können beispielsweise experimentell auf einem Prüfstand bestimmt werden.

Gemäß dem vorliegenden Ausführungsbeispiel wird als weitere Aktivierungsbedingung für den generatorischen Betrieb des ATLs 10 geprüft, ob ein Leerlauf- oder Teillastbetriebszustand vorliegt. Mit anderen Worten wird eine zu niedrige Abgastemperatur nur dann aktiv durch einen generatorischen Betrieb des ATLs 10 angehoben, wenn ein Leerlauf- oder Teillastbetriebszustand vorliegt.

Figur 4 zeigt zur Illustration derartiger Betriebszustände ein Motorbetriebskennfeld. Die mit dem Bezugszeichen 41 gekennzeichnete Kurve stellt die Volllastbegrenzungskurve des Motorbetriebskennfelds dar. Der Bereich von Betriebspunkten, die von der mit 40 gekennzeichneten Linie umgeben sind, stellen für einen beispielhaften Nutzfahrzeugmotor Betriebspunkte im Teillastbetrieb dar, für die das Abgastemperaturmanagement durchgeführt wird. Die Teillastbetriebszustände sind für eine beispielhafte Nutzfahrzeugbrennkraftmaschine diejenigen Betriebspunkte, deren Motordrehzahl in einem Drehzahlbereich von 600 bis 1600 Umdrehungen pro Minute und in einem Drehmomentbereich von 0 bis 700 Nm liegen.

In Schritt S2 prüft die Steuervorrichtung 1 somit, ob die Aktivierungsbedingung erfüllt ist. Ist dies der Fall und zeigt die Aktivierungsbedingung ferner an, dass die Abgastemperatur aktiv angehoben werden soll, wird nachfolgend Schritt S3 ausgeführt, in dem die Steuervorrichtung 1 einen generatorischen Betrieb der elektrischen Maschine 14 des ATLs 10 startet.

Der mit der Antriebswelle 13 des Läufers bewegungsgekoppelte Elektromotor 14 wird im generatorischen Betrieb durch den mit Abgasenergie der Brennkraftmaschine beaufschlagten Läufer 11, 12, 13 beschleunigt, so dass die Bewegungsenergie des Läufers 11, 12, 13 zum Teil in elektrische Energie umgewandelt wird und der Läufer sich dadurch abbremst. Ein generatorischer Betrieb des Abgasturboladers hat demnach zur Folge, dass sich der Ladedruck bzw. Luftmassendurchsatz der Brennkraftmaschine reduziert. Aufgrund des reduzierten Ladedrucks sinkt das Luftzahlverhältnis (Lambda) und erzeugt beim Verbrennen heißeres Abgas.

Der temporäre generatorische Betrieb des ATLs 10 wird beendet, wenn die Temperatur des Abgases die Anspringtemperatur der Abgasnachbehandlungseinrichtung überschritten hat. Nachfolgend wird das Verfahren wieder mit Schritt S1 fortgesetzt.

Wie vorstehend bereits erwähnt wurde, liegt ein besonderer Vorzug der Erfindung ferner darin, dass das Verfahren in analoger Weise dazu verwendet werden kann, die Abgastemperatur zum Schutz der Brennkraftmaschine 2 und der Abgasnachbehandlungseinrichtung 3 abzusenken, falls die Abgastemperatur zu hoch ist. Hierzu werden in Schritt S1 ferner Aktivierungsbedingungen überwacht, die eine zu hohe Abgastemperatur anzeigen. In Schritt S2 wird demzufolge ferner geprüft, ob ein Fall zu hoher Abgastemperatur vorliegt. Dies wäre z. B. dann der Fall, wenn die Abgastemperatur einen vorbestimmten oberen Grenzwert für die Abgastemperatur überschreitet. In diesem Fall wird nachfolgend Schritt S4 durchgeführt.

In Schritt S4 wird der ATL 10 elektromotorisch angetrieben, d. h. der Läufer 11, 12, 13 des ATLs 10 wird durch den elektromotorischen Betrieb des ATLs 10 zusätzlich beschleunigt.

Aufgrund der Beschleunigung des Läufers auf eine höhere Drehzahl erhöht sich der Luftmassendurchsatz und führt zu einer Absenkung der Abgastemperatur. Der temporäre elektromotorisch unterstützte Betrieb des ATLs 10 wird beendet, falls der Abgastemperaturwert unter den oberen Grenzwert gesunken ist. Nachfolgend wird das Verfahren wieder mit Schritt S1 fortgesetzt.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen.

### Bezugszeichenliste

- 1: Steuervorrichtung
- 2: Brennkraftmaschine
- 3: Abgasnachbehandlungseinrichtung
- 4: Verdichtereinlassleitung
- 5a: Verdichterauslassleitung bzw. Ladeluftleitung
- 5b: Turbineneinlassleitung
- 6: Turbinenauslassleitung
- 7: Abgasleitung zum Auspuff
- 8: Ladeluftkühler
- 9: Elektrische Leitung
- 10: Elektrifizierter Abgasturbolader
- 11: Verdichter
- 12: Turbine
- 13: Antriebswelle
- 14: Elektrische Maschine
- 15: Speicher für elektrische Energie
- 16: Steuerleitung
- 17: Elektrische Leitung
- 18: Steuerleitung
- 19: Signalleitung
- 20: Abgastemperatursensor
- 40: Abgastemperaturmanagement
- 41: Volllastbegrenzungskurve des Motorbetriebskennfelds

## Patentansprüche

1. Verfahren zur Einstellung, insbesondere zur Anhebung und/oder Absenkung, einer Abgastemperatur einer Brennkraftmaschine (2) mit einer in einer Abgasleitung (5b, 6) angeordneten Abgasnachbehandlungseinrichtung (3), wobei zur Einstellung der Abgastemperatur für die Abgasnachbehandlung ein elektromotorischer Betrieb und/oder ein generatorischer Betrieb eines elektrifizierten Abgasturboladers (10) verwendet wird (S1-S4), wobei der elektromotorische Betrieb (S4) und/oder der generatorische Betrieb (S3) des elektrifizierten Abgasturboladers (10) nach Erfüllung wenigstens einer Aktivierungsbedingung zur Aktivierung eines Abgastemperaturmanagements gestartet wird (S1, S2), wobei ein Läufer des Abgasturboladers aus der Abgasturbine, dem Verdichter und der Antriebswelle gebildet ist, wobei die Abgasturbine und der Verdichter über die Antriebswelle bewegungsgekoppelt sind; **dadurch gekennzeichnet,**
**dass** der generatorische Betrieb (S3) des elektrifizierten Abgasturboladers (10) gestartet wird, der den Läufer (11, 12, 13) des elektrifizierten Abgasturboladers (10) abbremst, wenn die Erfüllung wenigstens einer Aktivierungsbedingung anzeigt, dass die aktuelle Abgastemperatur zu erhöhen ist; und
**dass** der elektromotorische Betrieb (S4) des elektrifizierten Abgasturboladers (10) gestartet wird, der den Läufer (11, 12, 13) des Abgasturboladers (10) beschleunigt, wenn die Erfüllung wenigstens einer Aktivierungsbedingung anzeigt, dass die aktuelle Abgastemperatur zu verringern ist.

2. Verfahren nach Anspruch 1, **dadurch gekennzeichnet, dass** zumindest eine der folgenden Maßnahmen durchgeführt wird, wenn die Erfüllung wenigstens einer Aktivierungsbedingung anzeigt, dass die aktuelle Abgastemperatur zu erhöhen ist:
(a) Verstellen der Drosselklappe,
(b) Schließen einer Motorstauklappe,
(c) Aktivieren eines zusätzlichen an der Abgasleitung angeordneten Brennersystems, und
(d) Verstellung der Einspritzparameter der Brennkraftmaschine, derart, dass die verstellten Einspritzparameter eine Erhöhung der Abgastemperatur bewirken, wobei beispielsweise eine Spätverstellung des Einspritzbeginns und/oder eine Erhöhung der Dosiermenge des eingebrachten Brennstoffs erfolgt.

3. Verfahren nach Anspruch 2, **dadurch gekennzeichnet, dass** der elektromotorische Betrieb (S3) des elektrifizierten Abgasturboladers (10) gestartet wird, wenn
(a) die Erfüllung der wenigstens einen Aktivierungsbedingung anzeigt, dass die aktuelle Abgastemperatur zu erhöhen ist, und
(b) ein transienter Betriebszustand der Brennkraftmaschine vorliegt.

4. Verfahren nach einem der vorherigen Ansprüche, **dadurch gekennzeichnet, dass** eine Aktivierungsbedingung zur Aktivierung eines Abgastemperaturmanagements, die anzeigt, dass die Abgastemperatur zu erhöhen ist, ein Unterschreiten eines unteren Temperaturgrenzwerts durch die Abgastemperatur ist, wobei der untere Temperaturgrenzwert beispielsweise eine Anspringtemperatur der Abgasnachbehandlungseinrichtung (3) ist.

5. Verfahren nach einem der vorherigen Ansprüche, **dadurch gekennzeichnet, dass** eine Aktivierungsbedingung zur Aktivierung eines Abgastemperaturmanagements, die anzeigt, dass die Abgastemperatur zu erhöhen ist, ein Vorliegen eines Leerlaufs- und/oder Teillastbetriebszustands der Brennkraftmaschine ist.

6. Verfahren nach einem der vorherigen Ansprüche, **dadurch gekennzeichnet, dass** eine Aktivierungsbedingung zur Aktivierung eines Abgastemperaturmanagements anhand (a) der Messwerte wenigstens eines Motortemperatursensors ermittelt wird, wobei der wenigstens eine Motortemperatursensor eine Temperatur einer Ansaugluft, eines Motorkühlwassers und/oder eines Motoröls misst; und/oder
(b) einer Betriebsphase der Brennkraftmaschine ermittelt wird, wobei die Betriebsphase angibt, ob sich die Brennkraftmaschine im Kaltlaufbetrieb, Warmlaufbetrieb oder Heißbetrieb befindet und/oder ob die Brennkraftmaschine länger als eine vorbestimmte Zeit im Schubbetrieb betrieben wurde.

7. Steuervorrichtung (1) zur Einstellung, insbesondere zur Anhebung und/oder Absenkung, einer Abgastemperatur einer Brennkraftmaschine (2) mit einer in einer Abgasleitung (5b, 6) angeordneten Abgasnachbehandlungseinrichtung (3), wobei die Steuervorrichtung (1) eingerichtet ist, zu prüfen, ob wenigstens eine Aktivierungsbedingung zur Aktivierung eines Abgastemperaturmanagements erfüllt ist und falls ja, zur Einstellung der Abgastemperatur einen elektrifizierten Abgasturbolader (10) der Brennkraftmaschine (2) anzusteuern, um einen elektromotorischen und/oder einen generatorischen Betrieb des elektrifizierten Abgasturboladers (10) festzulegen, wobei ein Läufer des Abgasturboladers aus der Abgasturbine, dem Verdichter und der Antriebswelle gebildet ist, wobei die Abgasturbine und der Verdichter über die Antriebswelle bewegungsgekoppelt sind;
**dadurch gekennzeichnet, dass** die Steuervorrichtung (1) eingerichtet ist,
den generatorischen Betrieb (S3) des elektrifizierten Abgasturboladers (10) zu starten, der den Läufer (11, 12, 13) des elektrifizierten Abgasturboladers (10) abbremst, wenn die Erfüllung wenigstens einer Aktivierungsbedingung anzeigt, dass die aktuelle Abgastemperatur zu erhöhen ist; und
den elektromotorischen Betrieb (S4) des elektrifizierten Abgasturboladers (10) zu starten, der den Läufer (11, 12, 13) des Abgasturboladers (10) beschleunigt, wenn die Erfüllung wenigstens einer Aktivierungsbedingung anzeigt, dass die aktuelle Abgastemperatur zu verringern ist.

8. Steuervorrichtung nach Anspruch 7, die ausgeführt ist, das Verfahren gemäß einem der Ansprüche 2 bis 6 durchzuführen.

9. Fahrzeug, insbesondere Nutzfahrzeug, mit einer durch einen elektrifizierten Abgasturbolader aufgeladenen Brennkraftmaschine, aufweisend eine Steuervorrichtung (1) nach Anspruch 7 oder 8.

## Claims

1. Method for setting, in particular for raising and/or lowering, an exhaust-gas temperature of a combustion engine (2) having an exhaust-gas-aftertreatment device (3), which is arranged in an exhaust-gas line (5b, 6), wherein an electric-motor mode and/or a generator mode of an electrified exhaust turbocharger (10) are/is used (S1-S4) to set the exhaust-gas temperature for the exhaust-gas aftertreatment, wherein the electric-motor mode (S4) and/or the generator mode (S3) of the electrified exhaust turbocharger (10) is started (S1, S2) after at least one activation condition for activating exhaust-gas-temperature management has been fulfilled, wherein a rotor of the exhaust turbocharger is formed from the exhaust turbine, the compressor and the drive shaft, wherein the drive shaft couples the exhaust turbine and the compressor in terms of motion; **characterized**
**in that** the generator mode (S3) of the electrified exhaust turbocharger (10) is started, with the effect of braking the rotor (11, 12, 13) of the electrified exhaust turbocharger (10), when the fulfilment of at least one activation condition indicates that the current exhaust-gas temperature has to be increased; and
**in that** the electric-motor mode (S4) of the electrified exhaust turbocharger (10) is started, with the effect of accelerating the rotor (11, 12, 13) of the exhaust turbocharger (10), when the fulfilment of at least one activation condition indicates that the current exhaust-gas temperature has to be reduced.

2. Method according to Claim 1, **characterized in that** at least one of the following measures is implemented when the fulfilment of at least one activation condition indicates that the current exhaust-gas temperature has to be increased:
(a) adjustment of the throttle valve,
(b) closure of an engine-braking flap,
(c) activation of an additional burner system arranged on the exhaust-gas line, and
(d) adjustment of the injection parameters of the combustion engine such that the adjusted injection parameters bring about an increase in the exhaust-gas temperature, wherein for example a retardation of the start of injection and/or an increase in the metered quantity of fuel introduced takes place.

3. Method according to Claim 2, **characterized in that** the electric-motor mode (S3) of the electrified exhaust turbocharger (10) is started when
(a) the fulfilment of the at least one activation condition indicates that the current exhaust-gas temperature has to be increased, and
(b) a transient operating state of the combustion engine is present.

4. Method according to one of the preceding claims, **characterized in that** an activation condition for activating exhaust-gas-temperature management which indicates that the exhaust-gas temperature has to be increased is constituted by the exhaust-gas temperature falling below a lower temperature limit value, wherein the lower temperature limit value is, for example, a light-off temperature of the exhaust-gas-aftertreatment device (3).

5. Method according to one of the preceding claims, **characterized in that** an activation condition for activating an exhaust-gas-temperature management which indicates that the exhaust-gas temperature has to be increased is constituted by the presence of an idling and/or part-load operating state of the combustion engine.

6. Method according to one of the preceding claims, **characterized in that** an activation condition for activating exhaust-gas-temperature management is determined on the basis of
(a) the measured values of at least one engine-temperature sensor, wherein the at least one engine-temperature sensor measures a temperature of intake air, of engine-cooling water and/or of an engine oil; and/or
(b) an operating phase of the combustion engine, wherein the operating phase indicates whether the combustion engine is in cold-running mode, warmup mode or warm mode and/or whether the combustion engine has been operated in the overrun mode for longer than a predetermined period of time.

7. Control arrangement (1) for setting, in particular for raising and/or lowering, an exhaust-gas temperature of a combustion engine (2) having an exhaust-gas-aftertreatment device (3), which is arranged in an exhaust-gas line (5b, 6), wherein the control arrangement (1) is designed to check whether at least one activation condition for activating exhaust-gas-temperature management has been fulfilled and, if yes, to activate an electrified exhaust turbocharger (10) of the combustion engine (2) to establish an electric-motor and/or a generator mode of the electrified exhaust turbocharger (10), for the purpose of setting the exhaust-gas temperature, wherein a rotor of the exhaust turbocharger is formed from the exhaust turbine, the compressor and the drive shaft, wherein the drive shaft couples the exhaust turbine and the compressor in terms of motion;
**characterized in that** the control arrangement (1) is designed
to start the generator mode (S3) of the electrified exhaust turbocharger (10), with the effect of braking the rotor (11, 12, 13) of the electrified exhaust turbocharger (10), when the fulfilment of at least one activation condition indicates that the current exhaust-gas temperature has to be increased; and
to start the electric-motor mode (S4) of the electrified exhaust turbocharger (10), with the effect of accelerating the rotor (11, 12, 13) of the exhaust turbocharger (10), when the fulfilment of at least one activation condition indicates that the current exhaust-gas temperature has to be reduced.

8. Control arrangement according to Claim 7, which is configured to implement the method according to one of Claims 2 to 6.

9. Vehicle, in particular a commercial vehicle, having a combustion engine pressure-charged by an electrified exhaust turbocharger, and comprising a control arrangement (1) according to Claim 7 or 8.

## Revendications

1. Procédé permettant de régler, en particulier d'augmenter et/ou de diminuer, une température de gaz d'échappement d'un moteur à combustion interne (2) avec un dispositif de post-traitement des gaz d'échappement (3) disposé dans une conduite de gaz d'échappement (5b, 6), dans lequel un fonctionnement comme moteur électrique et/ou un fonctionnement comme générateur d'un turbocompresseur de gaz d'échappement électrique (10) est/sont utilisé(s) (S1 à S4) pour régler la température de gaz d'échappement pour le post-traitement des gaz d'échappement, dans lequel le fonctionnement comme moteur électrique (S4) et/ou le fonctionnement comme générateur (S3) du turbocompresseur de gaz d'échappement électrique (10) est/sont démarré(s) (S1, S2) après qu'au moins une condition d'activation est satisfaite pour activer une gestion de température des gaz d'échappement, dans lequel un rotor du turbocompresseur de gaz d'échappement est composé de la turbine de gaz d'échappement, du compresseur et de l'arbre de transmission, dans lequel la turbine de gaz d'échappement et le compresseur sont couplés en mouvement par l'arbre de transmission ;
**caractérisé en ce que**
le fonctionnement comme générateur (S3) du turbocompresseur de gaz d'échappement électrique (10) est démarré, lequel freine le rotor (11, 12, 13) du turbocompresseur de gaz d'échappement électrique (10) si le fait qu'au moins une condition d'activation est satisfaite indique que la température de gaz d'échappement actuelle doit être augmentée ; et
le fonctionnement comme moteur électrique (S4) du turbocompresseur de gaz d'échappement électrique (10) est démarré, lequel accélère le rotor (11, 12, 13) du turbocompresseur de gaz d'échappement (10) si le fait qu'au moins une condition d'activation est satisfaite indique que la température de gaz d'échappement actuelle doit être diminuée.

2. Procédé selon la revendication 1, **caractérisé en ce qu'**au moins l'une des mesures suivantes est prise si le fait qu'au moins une condition d'activation est satisfaite indique que la température de gaz d'échappement actuelle doit être augmentée :
(a) l'ajustage de l'étrangleur,
(b) la fermeture d'une vanne de retenue du moteur,
(c) l'activation d'un système de brûleur supplémentaire disposé sur la conduite de gaz d'échappement, et
(d) l'ajustage des paramètres d'injection du moteur à combustion interne de telle sorte que les paramètres d'injection ajustés provoquent une augmentation de la température de gaz d'échappement, par exemple un ajustage retardé du début d'injection et/ou une augmentation de la quantité de dosage du carburant introduit étant effectués.

3. Procédé selon la revendication 2, **caractérisé en ce que** le fonctionnement comme moteur électrique (S3) du turbocompresseur de gaz d'échappement électrique (10) est démarré si
(a) le fait qu'au moins une condition d'activation est satisfaite indique que la température de gaz d'échappement actuelle doit être augmentée, et
(b) un état de fonctionnement transitoire du moteur à combustion interne existe.

4. Procédé selon l'une quelconque des revendications précédentes, **caractérisé en ce qu'**une condition d'activation pour activer une gestion de température de gaz d'échappement qui indique que la température de gaz d'échappement doit être augmentée est un passage en dessous d'une valeur seuil de température inférieure par la température de gaz d'échappement, la valeur seuil de température inférieure étant par exemple une température d'amorçage du dispositif de post-traitement des gaz d'échappement (3).

5. Procédé selon l'une quelconque des revendications précédentes, **caractérisé en ce qu'**une condition d'activation pour activer une gestion de température des gaz d'échappement qui indique que la température de gaz d'échappement doit être augmentée est la présence d'un ralenti et/ou d'un état de fonctionnement à charge partielle du moteur à combustion interne.

6. Procédé selon l'une quelconque des revendications précédentes, **caractérisé en ce qu'**une condition d'activation pour activer une gestion de température des gaz d'échappement est déterminée à l'aide
(a) des valeurs mesurées d'au moins un capteur de température de moteur, ledit au moins un capteur de température de moteur mesurant une température de l'air d'admission, de l'eau de refroidissement du moteur et/ou de l'huile moteur ; et/ou
(b) d'une phase de fonctionnement du moteur à combustion interne, la phase de fonctionnement indiquant si le moteur à combustion interne se trouve en marche à froid, en marche à chaud ou en surchauffe et/ou si le moteur à combustion interne a fonctionné plus longtemps qu'une durée prédéterminée en mode poussée.

7. Dispositif de commande (1) permettant de régler, en particulier d'augmenter et/ou de diminuer, une température de gaz d'échappement d'un moteur à combustion interne (2) avec un dispositif de post-traitement des gaz d'échappement (3) disposé dans une conduite de gaz d'échappement (5b, 6), le dispositif de commande (1) étant aménagé pour vérifier si au moins une condition d'activation pour activer une gestion de température des gaz d'échappement est satisfaite, et si oui, pour piloter un turbocompresseur de gaz d'échappement électrique (10) du moteur à combustion interne (2) pour régler la température de gaz d'échappement, afin d'établir un fonctionnement comme moteur électrique et/ou un fonctionnement comme générateur du turbocompresseur de gaz d'échappement électrique (10), dans lequel un rotor du turbocompresseur de gaz d'échappement est composé de la turbine de gaz d'échappement, du compresseur et de l'arbre de transmission, dans lequel la turbine de gaz d'échappement et le compresseur sont couplés par un arbre de transmission ;
**caractérisé en ce que** le dispositif de commande (1) est aménagé pour
démarrer le fonctionnement comme générateur (S3) du turbocompresseur de gaz d'échappement électrique (10) qui freine le rotor (11, 12, 13) du turbocompresseur de gaz d'échappement électrique (10) si le fait qu'au moins une condition d'activation est satisfaite indique que la température de gaz d'échappement actuelle doit être augmentée ; et
démarrer le fonctionnement comme moteur électrique (S4) du turbocompresseur de gaz d'échappement électrique (10) qui accélère le rotor (11, 12, 13) du turbocompresseur de gaz d'échappement (10) si le fait qu'au moins une condition d'activation est satisfaite indique que la température des gaz d'échappement actuelle doit être diminuée.

8. Dispositif de commande selon la revendication 7, réalisé pour effectuer le procédé selon l'une quelconque des revendications précédentes 2 à 6.

9. Véhicule, en particulier véhicule utilitaire, avec un moteur à combustion interne chargé par un turbocompresseur de gaz d'échappement électrique, comprenant un dispositif de commande (1) selon la revendication 7 ou 8.
